(19) Europäisches Patentamt
European Patent Office
Office européen des brevets

(11) **EP 4 401 476 A1**

(12) **EUROPEAN PATENT APPLICATION**
published in accordance with Art. 153(4) EPC

(43) Date of publication:
**17.07.2024 Bulletin 2024/29**

(21) Application number: **21956777.3**

(22) Date of filing: **09.09.2021**

(51) International Patent Classification (IPC):
**H04W 56/00** *(2009.01)*     **H04W 64/00** *(2009.01)*
**H04W 84/06** *(2009.01)*

(52) Cooperative Patent Classification (CPC):
**H04W 56/00; H04W 64/00; H04W 84/06;**
Y02D 30/70

(86) International application number:
**PCT/JP2021/033223**

(87) International publication number:
**WO 2023/037480 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **YOSHIOKA, Shohei**
**Tokyo 100-6150 (JP)**

• **KURITA, Daisuke**
**Tokyo 100-6150 (JP)**
• **NAGATA, Satoshi**
**Tokyo 100-6150 (JP)**
• **LIU, Wenjia**
**Beijing, 100190 (CN)**
• **WANG, Jing**
**Beijing, 100190 (CN)**

(74) Representative: **Hoffmann Eitle**
**Patent- und Rechtsanwälte PartmbB**
**Arabellastraße 30**
**81925 München (DE)**

(54) **TERMINAL, BASE STATION AND COMMUNICATION METHOD**

(57) A terminal includes: a reception unit configured to receive information indicating an orbit or a position of a flying object that relays a communication with a base station; and a control unit configured to perform time or frequency synchronization in the communication with the base station relayed by the flying object, based on the information indicating the orbit or the position of the flying object.

## FIG.13

**Description**

FIELD OF THE INVENTION

The present invention relates to a terminal, a base station and a communication method in a wireless communication system.

BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

Currently, NTN (Non-Terrestrial Network) is also discussed. The NTN provides services to an area that cannot be covered by a terrestrial 5G network mainly due to the cost aspect, by using a non-terrestrial network such as an artificial satellite (hereinafter, referred to as a satellite).

In NR release 17, a technique of performing time synchronization or frequency synchronization based on the satellite orbit is being discussed. For example, the terminal shares the satellite orbit data from the base station. The terminal can calculate a value indicating the timing advance for the service link and can perform pre-compensation or post-compensation for the Doppler shift for frequency compensation, based on the satellite orbit data and on the position information acquired by GNSS (Global Navigation Satellite System).

Citation List

Non-Patent Document

Non-Patent Document 1: 3GPP TS 38.300 V16.6.0 (2021-06)
Non-Patent Document 2: 3GPP TS 38.213 V16.6.0 (2021-06)

SUMMARY OF THE INVENTION

TECHNICAL PROBLEM

However, there is a problem that a mechanism based on the satellite orbit as used in the conventional technique does not function in the non-terrestrial network based on a flying object that is different from a satellite of the HAPS network, or the like.

The present invention has been made in view of the above, and it is an object of the present invention to provide a technique that enables the application of the mechanism based on the satellite orbit to the non-terrestrial network based on the flying object.

SOLUTION TO PROBLEM

According to the disclosed technology, a terminal is provided. The terminal includes: a reception unit configured to receive information indicating an orbit or a position of a flying object that relays a communication with a base station; and a control unit configured to perform time or frequency synchronization in the communication with the base station relayed by the flying object, based on the information indicating the orbit or the position of the flying object.

ADVANTAGEOUS EFFECTS OF INVENTION

According to the disclosed technique, a technique is provided that enables the application of the mechanism based on the satellite orbit to the non-terrestrial network based on the flying object.

BRIEF DESCRIPTION OF THE DRAWINGS

[Fig. 1] is a first drawing for describing a non-terrestrial network.

[Fig. 2] is a second drawing for describing the non-terrestrial network.

[Fig. 3] is a third drawing for describing the non-terrestrial network.

[Fig. 4] is a fourth drawing for describing the non-terrestrial network.

[Fig. 5] is a drawing for describing an enhancement of a timing advance.

[Fig. 6] is a drawing for describing an enhancement of frequency synchronization.

[Fig. 7] is a drawing for describing a method of sharing the satellite orbit data.

[Fig. 8] is a drawing for describing a first information set of the satellite orbit data.

[Fig. 9] is a drawing for describing a second information set of the satellite orbit data.

[Fig. 10] is a drawing for describing orbit data of a flying object.

[Fig. 11] is a drawing for describing a case in which the orbit of the flying object is not horizontal to the ground.

[Fig. 12] is a drawing illustrating an example of a functional configuration of a base station in an embodiment of the present invention.

[Fig. 13] is a drawing illustrating an example of a functional configuration of a terminal in an embodiment of the present invention.

[Fig. 14] is a drawing illustrating an example of a hardware structure of the base station or the terminal in an embodiment of the present invention.

[Fig. 15] is a drawing illustrating an example of a structure of a vehicle in an embodiment of the present invention.

DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but are not limited to, conventional NR or LTE, for example. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, a radio parameter is "configured" may mean that a predetermined value is pre-configured, or may mean that a radio parameter indicated by the base station or the terminal is configured.

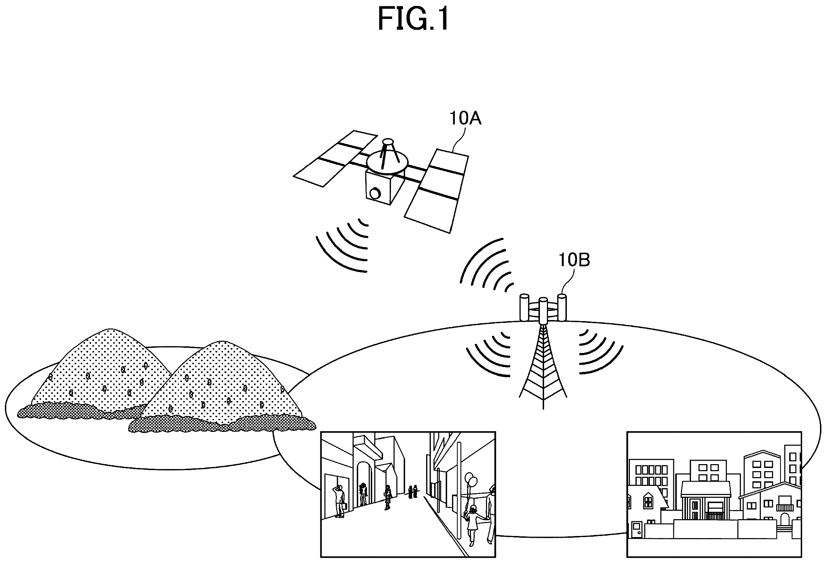

Fig. 1 is a first drawing for describing a non-terrestrial network. The non-Terrestrial Network (NTN) provides services to an area that cannot be covered by a terrestrial 5G network mainly due to the cost aspect, by using a non-terrestrial device such as a satellite. Further, services with higher reliability may be provided by NTN. For example, NTN may be assumed to be applied to IoT (Inter of things), ships, buses, trains, and critical communications. Further, NTN has scalability according to efficient multi-cast or broadcast.

As an example of NTN, as illustrated in Fig. 1, a satellite 10A can provide services to an area such as a mountainous area for which a terrestrial base station is not arranged, by performing retransmission of a signal transmitted by a terrestrial base station 10B.

Note that the terrestrial 5G network may have a structure as described below. The terrestrial 5G network may include one or more base stations 10 and terminals 20. The base station 10 is a communication device that provides one or more cells and performs wireless communication with the terminal 20. Physical resources of the radio signal may be defined in the time domain and the frequency domain, the time domain may be defined by the number of OFDM symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, a NR-PBCH, and may be referred to as broadcast information.

The base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, both the base station 10 and terminal 20 may perform communications via an SCell (Secondary Cell) and a PCell (Primary Cell) using CA (Carrier Aggregation).

The terminal 20 may be a communication apparatus that includes a wireless communication function such as a smart-phone, a mobile phone, a tablet, a wearable terminal, a communication module for M2M (Machine-to-Machine), or the like. The terminal 20 uses various communication services provided by a wireless communication system, by receiving a control signal or data in DL from the base station 10 and transmitting a control signal or data in UL to the base station 10.

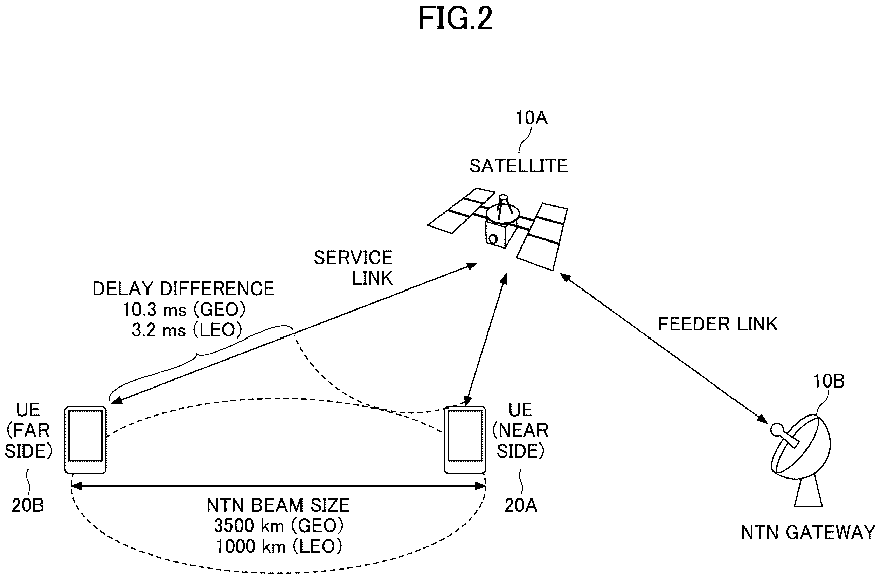

Fig. 2 is a second drawing for describing the non-terrestrial network. In NTN, a cell or an area for each beam is very large when compared with a terrestrial network, TN. Fig. 2 illustrates an example of NTN including retransmissions by a satellite. The connection between a satellite 10A and an NTN gateway 10B is referred to as a feeder link, and the connection between the satellite 10A and a UE 20 is referred to as a service link.

As illustrated in Fig. 2, the delay difference between the near side UE 20A and the far side UE 20B is, for example, 10.3 ms in a case of GEO (Geosynchronous orbit), and 3.2 ms in a case of LEO (Low Earth orbit). Further, the beam size in NTN is, for example, 3500 km in a case of GEO, and 1000 km in a case of LEO.

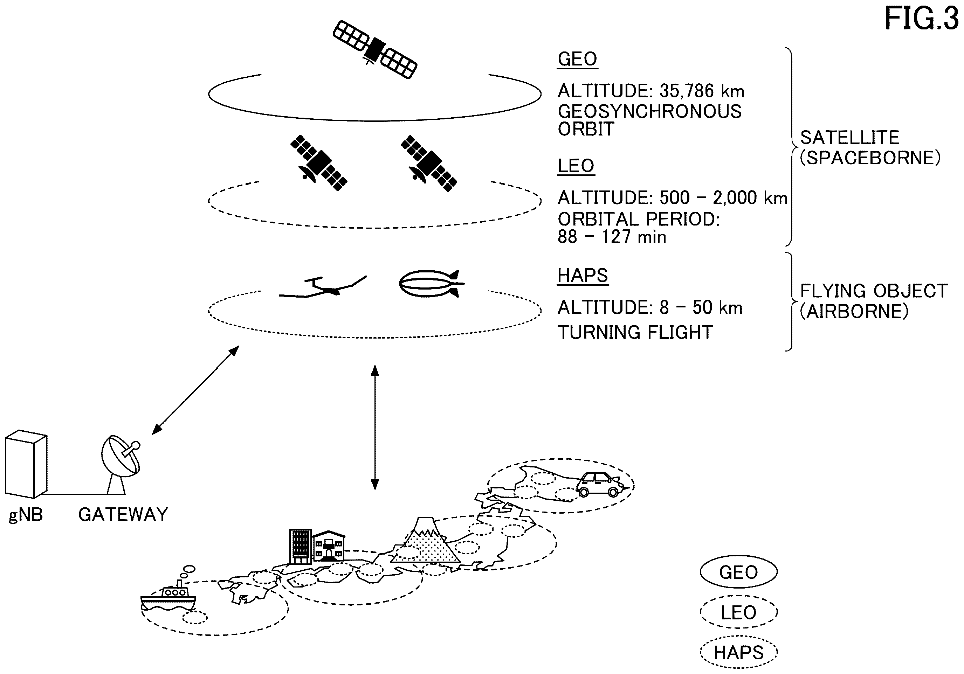

Fig. 3 is a third drawing for describing the non-terrestrial network. As illustrated in Fig. 3, NTN is implemented by a satellite in space or a flying object in the air. For example, the GEO satellite may be a satellite located at altitude 35,786 km, with a geosynchronous orbit. For example, the LEO satellite may be a satellite located at altitude 500 to 2000 km, with an orbital period of 88 to 127 minutes. For example, HAPS (High Altitude Platform Station) may be a flying object located at altitude 8 to 50 km, with a turning flight.

As illustrated in Fig. 3, the GEO satellite, the LEO satellite and the HAPS flying object may be connected to a terrestrial station gNB via a gateway. In addition, the service area increases in the order of HAPS, LEO, and GEO.

For example, the coverage of the 5G network can be enhanced by NTN, with respect to the area with no service and the area with services. In addition, for example, the continuity, availability, and reliability of services in the ship, bus, train or other important communications can be improved by NTN. Note that NTN may be indicated by transmitting a dedicated parameter to the terminal 20, and the dedicated parameter may be, for example, a parameter related to TA (Timing Advance) determination based on the information related to the satellite or the flying object.

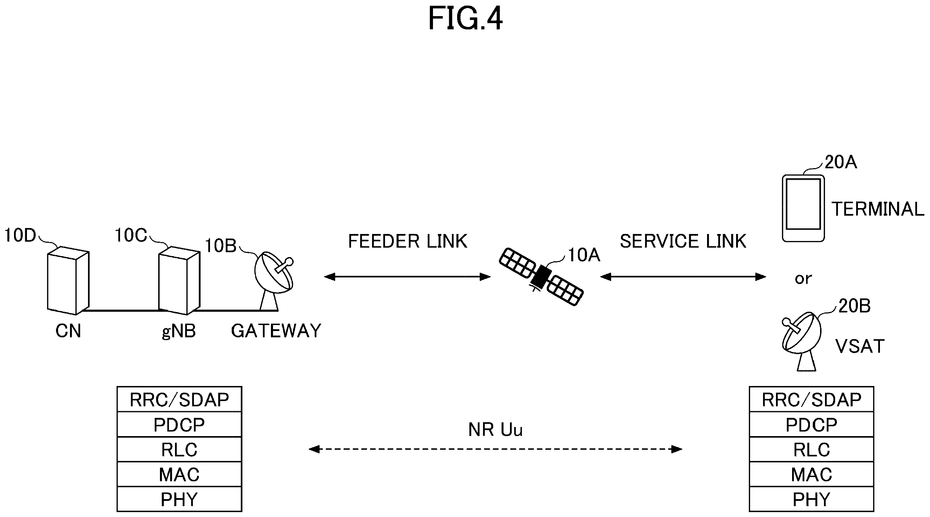

Fig. 4 is a fourth drawing for describing the non-terrestrial network. Fig. 4 illustrates an example of an NTN network architecture that is assumed in a case of transparent payload. As illustrated in Fig. 4, a CN (Core Network) 10D, a gNB 10C and a gateway 10B are connected. The gateway 10B is connected to a satellite 10A via a feeder link. The satellite 10A is connected to a terminal 20A or a VSAT (Very small aperture terminal) 20B via a service link. NR Uu is established between the gNB 10C and the terminal 20A or VSAT 20B.

In addition, as an assumption of the NTN network architecture, FDD may be adopted, or TDD may be available. In addition, the terrestrial cell may be fixed or movable. In addition, the terminal 20 may have GNSS (Global Navigation Satellite System) capability. For example, in FR1, a hand-held device with power class 3 may be assumed. In addition, a VSAT device may be assumed at least in FR2.

In addition, a regenerative payload may be assumed in the NTN network architecture. For example, a gNB function may be installed in the satellite or the flying object. In addition, a gNB-DU may be installed in the satellite or the flying object, and a gNB-CU may be arranged as a terrestrial station.

In NTN, it is necessary to consider the long propagation delay, LEO or HAPS movement, and communications via GEO, LEO or HAPS. Because of these characteristics of NTN, enhancement of HARQ operation is being discussed. For example, the HARQ feedback may be disabled. In a case where the HARQ feedback is disabled, it is possible to transmit two consecutive DL transport blocks in a single HARQ process without waiting for the feedback.

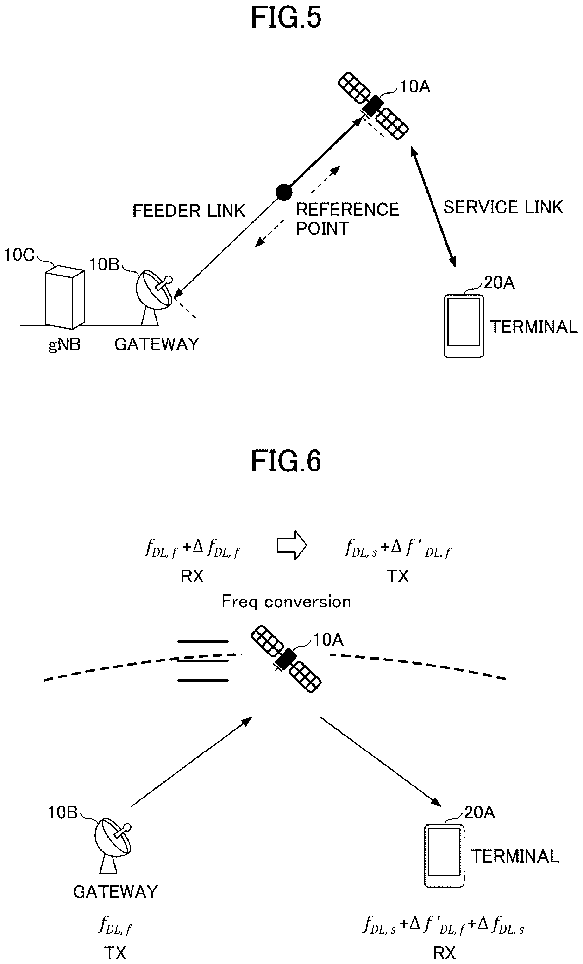

Fig. 5 is a drawing for describing an enhancement of a timing advance. In the conventional techniques such as NR, the timing of the downlink or the uplink is adjusted at the reference point (RP) alone. In other words, the adjustment is performed at the RP so that the timings of the downlink and the uplink are aligned. The RP is flexibly determined between: a terrestrial base station 10C or a gateway 10B; and a satellite 10A or a HAPS, in accordance with the network implementation. It is to be noted that, hereinafter, the terrestrial base station 10C and the gateway 10B are also collectively referred to as a base station 10.

It is necessary for the RP in the base station 10 to frequently broadcast information using the feeder link for the sake of simple network implementation. In addition, at the RP in the satellite 10A or the HAPS, the backward compatibility of regenerated payload or ISL/IAL is required.

The timing advance value $T_{TA}$ may be calculated according to the following formula.

$$\mathrm{T_{TA}=(N_{TA}+N_{TA,UE-specific}+N_{TA,common}+N_{TA,offset})*T_c}$$

Here, $N_{TA}$ is 0 in a case of PRACH, and is a TA command field included in msg2/msgB and TA command MAC CE.

$N_{TA,UE-specific}$ is a terminal-self-estimated TA for the service link delay based on the position obtained according to GNSS and on the satellite orbit. In other words, TA for the propagation delay related to the service link.

$N_{TA,common}$ is a value that is broadcast by the network, and may be 0, and the broadcasting method, the updating method, that is, the timing drift compensation method, etc., are being discussed. In other words, TA for the propagation delay related to the feeder link.

$N_{TA,offset}$ is a fixed offset in accordance with the band and the LTE/NR coexistence, and is specified in clause 4.2 in non-patent document 2.

Fig. 6 is a drawing for describing an enhancement of frequency synchronization. In the conventional technology such as NR, with respect to the frequency shift caused by the movement of LEO, HAPS, etc., a technique of frequency compensation in both downlink and uplink is being developed.

The first method is a method of compensation, by the network, for the Doppler shift and the transponder error on the feeder link without affecting the technical specification. The first method is, for example, pre-compensation performed by a gateway 10B.

The second method is a method of compensation, by a terminal 20A, for the Doppler shift generated in the service link. The second method is, for example, pre-compensation or post-compensation, performed by the terminal 20A, based on the positional information obtained according to GNSS and on the satellite orbit.

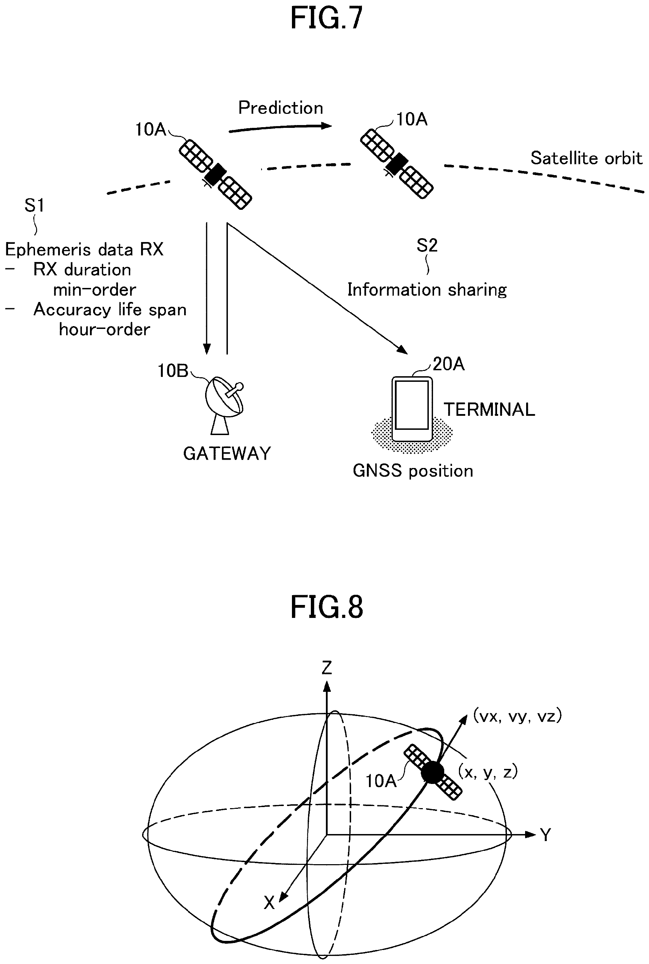

Fig. 7 is a drawing for describing a method of sharing the satellite orbit data. The terminal 20A performs self-estimation of the timing advance for the service link delay. In addition, the terminal 20A performs compensation for the Doppler shift in the service link.

The information that is required for the above-described operations includes the positional information that is obtained according to GNSS and the satellite orbit data. Accordingly, in step S1, the base station 10 (a gateway 10B and a terrestrial base station 10C) receives the satellite orbit data from a satellite 10A. The reception interval of the satellite orbit data is in units of (the order of) minutes, the accuracy lifespan of the satellite orbit data is in units of (the order of) hours. In step S2, the base station 10 (a gateway 10B and a terrestrial base station 10C) shares the data with the terminal 20A via the satellite 10A.

The terminal 20A estimates the destination of the satellite 10A based on the satellite orbit data, and, by doing so, performs the above-described self-estimation of the timing advance and compensation for the Doppler shift.

Fig. 8 is a drawing for describing a first information set of the satellite orbit data. The first information set of the satellite orbit data includes vectors indicating a position (x, y, z) and a velocity (vx, vy, vz) of the satellite 10A represented by ECEF (acronym for earth-centered, earth-fixed) coordinates. The first information set can reduce the computer processing complexity and is compatible with HAPS/ATG.

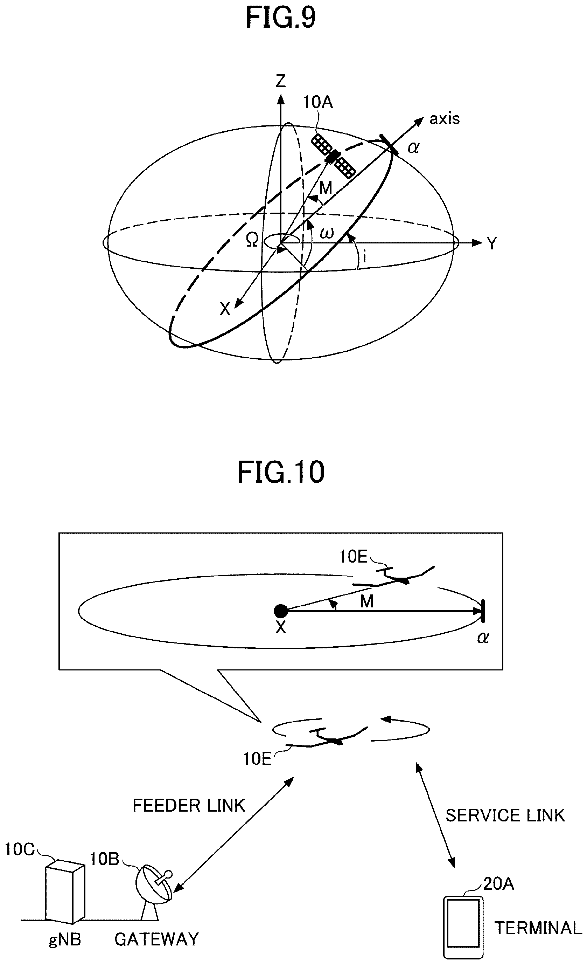

Fig. 9 is a drawing for describing a second information set of the satellite orbit data. The second information set of the satellite orbit data includes orbital elements including Keplerian elements in which an ellipse is used for approximating the satellite orbit. Specifically, the second information set of the satellite orbit data includes the length of the semi-major axis of the ellipse, a [m], the eccentricity, e, the argument of periapsis, w [rad], the longitude of ascending node, Q [rad], the inclination, i [rad], and the mean anomaly, M [rad], at epoch time, to. The second information set enables higher-accuracy estimation, and enables longer-period broadcast.

(Overview of embodiment)

In an embodiment of the present invention, an example will be described in which the above-described mechanism based on the satellite orbit data is applied to the non-terrestrial network based on the flying object such as HAPS. Hereinafter, HAPS will be used as an example. However, the technique related to an embodiment of the present invention can be applied to another non-terrestrial network.

(Embodiment 1)

In an embodiment 1, the definition of information indicating the orbit or the position of a flying object will be described. The flying object is a device that relays the communication between the base station and the terminal in the non-terrestrial network.

Fig. 10 is a drawing for describing orbit data of a flying object. The orbit data of the flying object 10E may include information indicating at least one of the following.

- Altitude of the flying object/orbit

- Change rate of the altitude of the flying object/orbit
- Position of the flying object
- Radius or diameter of the orbit (in a case where a circle is used for approximating the orbit)
- Semi-major axis or eccentricity of the orbit (in a case where an ellipse is used for approximating the orbit)
- Shape of the orbit (circle, ellipse, figure eight, etc.)
- Period
- Reference point of the orbit
- Reference position of the flying object at the reference time
- Velocity and/or change rate of the velocity

In addition, the orbit data of the flying object 10E may be the data obtained by modifying the satellite orbit data format of the NR release 17 to be used for HAPS.

Specifically, the orbit data of the flying object 10E may be the data including information described below among the satellite orbit data of the NR release 17.

- Length of the semi-major axis of an ellipse, $\alpha$ [m]
- Eccentricity, e
- Mean anomaly, M [rad] at epoch time, to

In addition, the orbit data of the flying object 10E may be the data obtained by excluding the following data from the satellite orbit data of the NR release 17.

- Argument of periapsis, $\omega$ [rad]
- Longitude of ascending node, S2 [rad]
- Inclination, i [rad]

In addition, the orbit data of the flying object 10E may be the data obtained by adding the following data to the satellite orbit data of the NR release 17.

- Reference position of the orbit, X
- Altitude of the flying object 10E or the change rate of the altitude

The terminal 20A may assume that the orbit of the flying object 10E is approximately horizontal to the ground. Alternatively, the terminal 20A may assume that the orbit of the flying object 10E is not approximately horizontal to the ground.

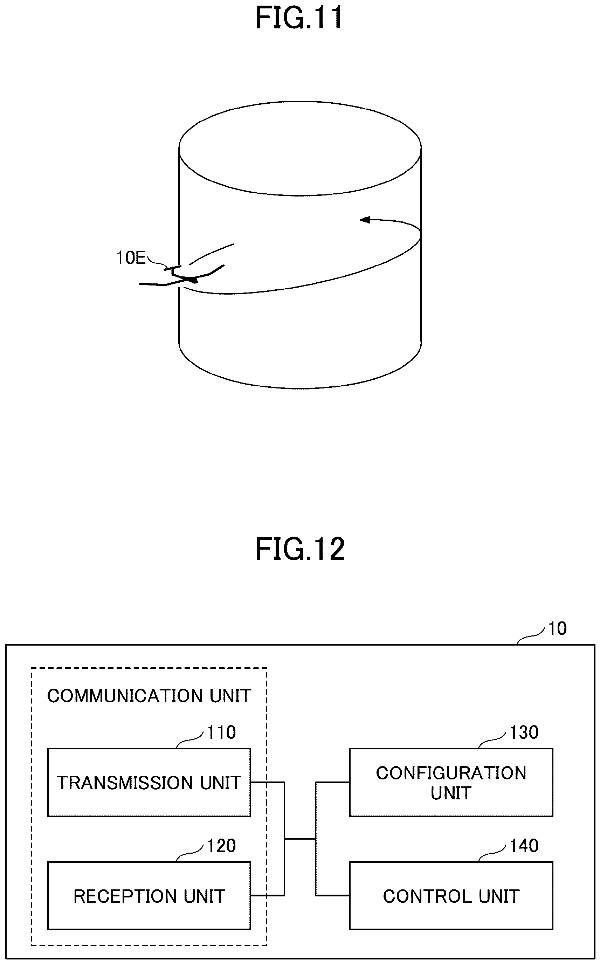

Fig. 11 is a drawing for describing a case in which the orbit of the flying object is not horizontal to the ground. In this case, the orbit data of the flying object 10E may include at least one of the argument of periapsis, $\omega$ [rad], the longitude of ascending node, S2 [rad], or the inclination, i [rad].

Information indicating that the flying object 10E is relatively standing still when viewed from the terminal 20A may be indicated to the terminal 20A together with, or in place of, the orbit data of the flying object 10E. This indication may be performed by indicating that the velocity=0 and/or the change rate of the velocity=0.

The terminal 20A may perform different operations between a case of a state of relatively standing still and a case of a state other than the standing-still state. Examples of the different operations will be described below.

(Embodiment 2)

In an embodiment 2, an example will be described in which information indicating the orbit or the position of the flying object is transmitted to the terminal via the network.

Specifically, the base station 10 receives the information indicating the orbit or the position of the flying object 10E that relays the communication with the terminal 20A from the flying object 10E. Subsequently, the base station 10 transmits the information indicating the orbit or the position of the flying object 10E to the terminal 20A via the flying object 10E.

The terminal 20A may assume that which information is to be transmitted via the network from among the information indicating the orbit or the position of the flying object 10E is to be explicitly indicated.

The terminal 20A may assume that the network type is to be indicated via the network. The network type includes, for example, TN, satellite-based NTN, HAPS-based NTN, and the like. The terminal 20A may assume that the information indicating the orbit or the position of the corresponding flying object is to be transmitted via the network, based on the network type.

(Embodiment 3)

In an embodiment 3, an example will be described in which the terminal uses the information for the time or frequency synchronization.

The terminal 20A may calculate the timing advance value of the service link, based on the information indicating the orbit or the position of the flying object 10E and/or the positional information obtained by GNSS.

In addition, the terminal 20A may perform pre-compensation or post-compensation for the Doppler shift, based on the information indicating the orbit or the position of the flying object 10E and/or the positional information obtained by GNSS.

(Embodiment 4)

In an embodiment 4, an example will be described in which the terminal assumes that the information indicating the orbit or the position of the flying object is valid in a given time range.

When information indicating the orbit or the position of the flying object 10E is obtained, the terminal 20A may assume that the information is valid without an expiration date. Alternatively, the terminal 20A may assume that the information is valid as long as the RRC CONNECTED state is maintained. It is to be noted that, as illustrated in an embodiment 1, the terminal 20A may assume that the information indicating the orbit or the position of the flying object 10E is valid without an expiration date in a case where information indicating that the flying object 10E is relatively standing still when viewed from the terminal 20A is indicated.

When information indicating the orbit or the position of the flying object 10E is obtained, the terminal 20A may assume that the information is valid until information related to the update is received.

For example, the terminal 20 may assume that the updating information is to be transmitted via RRC signaling, MAC-CE, or DCI that is specific to the terminal 20A.

In addition, the terminal 20 may assume that the updating information is to be transmitted via signaling common in the cell (among the multiple terminals 20A). The signaling common in the cell includes, for example, SIB, group-common DCI, and the like.

It is to be noted that, as illustrated in an embodiment 1, the terminal 20A may assume that the information indicating the orbit or the position of the flying object 10E is valid until information related to the update is received in a case where information indicating that the flying object 10E is relatively standing still when viewed from the terminal 20A is not indicated. In other words, in a case where information indicating that the flying object 10E is relatively standing still when viewed from the terminal 20A is not indicated, the terminal 20A is not required to assume that the information is valid without an expiration date.

In addition, the terminal 20A may assume that the expiration date of the information indicating the orbit or the position of the flying object 10E is defined in advance. In addition, in a case where the information indicating the orbit or the position of the flying object 10E expires, the terminal 20A may update the information by receiving the updating information according to the above-described method.

The terminal 20A may assume that information related to the expiration date is specified in advance in the technical specification, or may assume that the information related to the expiration date is included in the information indicating the orbit or the position of the flying object 10E.

(Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only proposed functions in one of the embodiments.

<Base station 10>

Fig. 12 is a diagram illustrating an example of a functional configuration of the base station 10. As shown in Fig. 12, the base station 10 includes a transmission unit 110, a reception unit 120, a configuration unit 130, and a control unit 140. The functional configuration illustrated in Fig. 12 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus as necessary. The control unit 140 controls the entire base station 10 including, for example, control of signal transmission and reception. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

<Terminal 20>

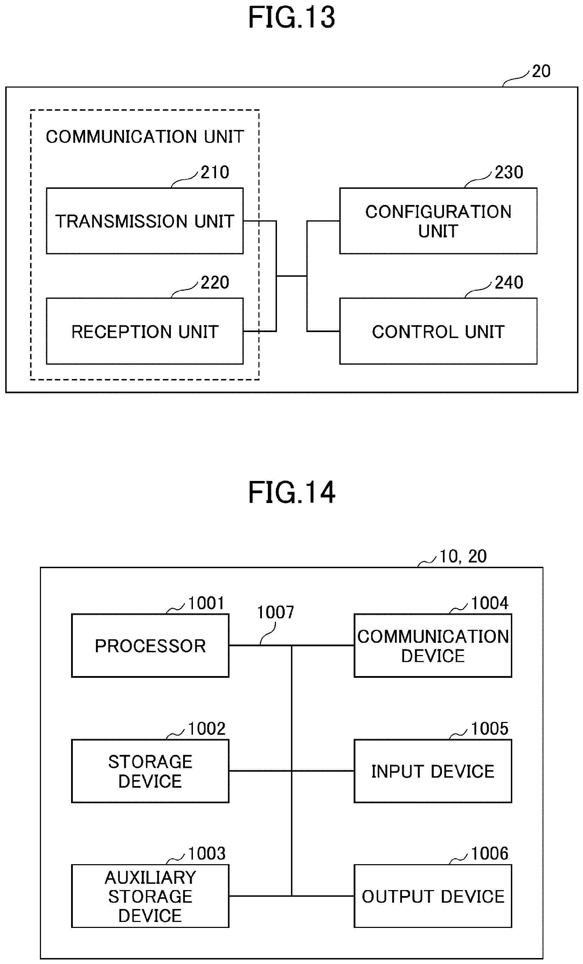

Fig. 13 is a diagram illustrating an example of a functional configuration of the terminal 20. As shown in Fig. 13, the terminal 20 includes a transmission unit 210, a reception unit 220, a configuration unit 230, and a control unit 240. The functional configuration illustrated in Fig. 13 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20 including control related to signal transmission and reception. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

The terminal or base station according to an embodiment of the present invention may be configured as a terminal or a base station described in the following paragraphs. In addition, a communication method below may be performed.

<Configuration related to an embodiment of the present invention>

(First item) A terminal including:

a reception unit configured to receive information indicating an orbit or a position of a flying object that relays a communication with a base station; and
a control unit configured to perform time or frequency synchronization in the communication with the base station relayed by the flying object, based on the information indicating the orbit or the position of the flying object.

(Second item) The terminal as described in the first item, wherein

the information indicating the orbit or the position of the flying object includes at least one of an altitude of the flying object or the orbit, a change rate of the altitude of the flying object or the orbit, the position of the flying object, a radius or a diameter of the orbit, a semi-major axis and an eccentricity of the orbit, a shape of the orbit, a period of the orbit, a reference point of the orbit, a reference position of the flying object at a reference time, a velocity of the flying object, or a change rate of the velocity of the flying object, and
the reception unit receives information that explicitly indicates which information is to be transmitted among the information indicating the orbit or the position of the flying object.

(Third item) The terminal as described in the first item or the second item, wherein
the control unit performs calculation of a timing advance value of a service link or compensation of Doppler shift, based on the information indicating the orbit or the position of the flying object.
(Fourth item) The terminal as claimed in any one of claims 1 to 3, wherein

the control unit assumes that the information indicating the orbit or the position of the flying object is valid in a given time range.

(Fifth item) A base station including:

a reception unit configured to receive information indicating an orbit or a position of a flying object that relays a communication with a terminal from the flying object; and
a transmission unit configured to transmit the information indicating the orbit or the position of the flying object to the terminal.

(Sixth item) A communication method performed by a terminal, the communication method including:

receiving information indicating an orbit or a position of a flying object that relays a communication with a base station; and
performing time or frequency synchronization in the communication with the base station relayed by the flying object, based on the information indicating the orbit or the position of the flying object.

According to any one of the above-described configurations, a technique is provided that enables the application of the mechanism based on the satellite orbit to the non-terrestrial network based on the flying object. According to the second item, information indicating the orbit or the position of the flying object can be appropriately specified. According to the third item, self-estimation of the timing advance of the service link or compensation for the Doppler shift can be performed based on the information indicating the orbit or the position of the flying object. According to the fourth item, an expiration date of the information indicating the orbit or the position of the flying object can be configured in advance.

(Hardware structure)

In the above block diagrams used for describing an embodiment of the present invention (Fig. 12 and Fig. 13), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

For example, the base station 10, the terminal 20, etc., according to an embodiment of the present disclosure may function as a computer for processing the radio communication method of the present disclosure. Fig. 14 is a drawing illustrating an example of hardware structures of the base station 10 and the terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and the terminal 20 may include one or more of each of the devices illustrated in the figure, or may be configured without including some of the devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading or writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 12 may be realized by control programs that are stored in the storage device 1002 and are executed by the processor 1001. Further, for example, the control unit 240 of the terminal 20 illustrated in Fig. 13 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

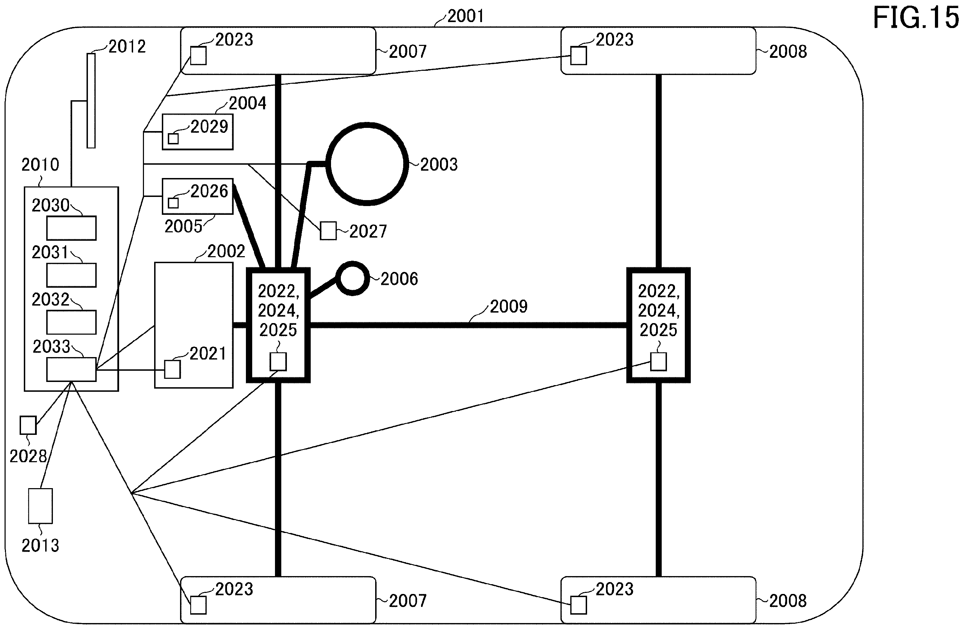

Fig. 15 shows an example of a configuration of a vehicle 2001. As shown in Fig. 15, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

(Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction) . Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP

**EP 4 401 476 A1**

and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

DESCRIPTION OF THE REFERENCE NUMERALS

| | |
|---|---|
| 10 | Base station |
| 10A | Satellite |
| 10B | Gateway |
| 10C | Terrestrial base station |
| 10D | CN |
| 10E | Flying object |
| 110 | Transmission unit |
| 120 | Reception unit |
| 130 | Configuration unit |
| 140 | Control unit |
| 20 | Terminal |
| 210 | Transmission unit |
| 220 | Reception unit |
| 230 | Configuration unit |
| 240 | Control unit |
| 30 | Core network |
| 1001 | Processor |
| 1002 | Storage device |
| 1003 | Auxiliary storage device |
| 1004 | Communication device |
| 1005 | Input device |
| 1006 | Output device |
| 2001 | Vehicle |
| 2002 | Drive unit |
| 2003 | Steering unit |
| 2004 | Accelerator pedal |

2005    Brake pedal
2006    Shift lever
2007    Front wheel
2008    Rear wheel
2009    Axle
2010    Electronic control unit
2012    Information service unit
2013    Communication module
2021    Current sensor
2022    Revolution sensor
2023    Pneumatic sensor
2024    Vehicle speed sensor
2025    Acceleration sensor
2026    Brake pedal sensor
2027    Shift lever sensor
2028    Object detection sensor
2029    Accelerator pedal sensor
2030    Driving support system unit
2031    Microprocessor
2032    Memory (ROM, RAM)
2033    Communication port (IO port)

**Claims**

1.  A terminal comprising:

    a reception unit configured to receive information indicating an orbit or a position of a flying object that relays a communication with a base station; and
    a control unit configured to perform time or frequency synchronization in the communication with the base station relayed by the flying object, based on the information indicating the orbit or the position of the flying object.

2.  The terminal as claimed in claim 1, wherein

    the information indicating the orbit or the position of the flying object includes at least one of an altitude of the flying object or the orbit, a change rate of the altitude of the flying object or the orbit, the position of the flying object, a radius or a diameter of the orbit, a semi-major axis and an eccentricity of the orbit, a shape of the orbit, a period of the orbit, a reference point of the orbit, a reference position of the flying object at a reference time, a velocity of the flying object, or a change rate of the velocity of the flying object, and
    the reception unit receives information that explicitly indicates which information is to be transmitted among the information indicating the orbit or the position of the flying object.

3.  The terminal as claimed in claim 1 or 2, wherein
    the control unit performs calculation of a timing advance value of a service link or compensation for a Doppler shift, based on the information indicating the orbit or the position of the flying object.

4.  The terminal as claimed in any one of claims 1 to 3, wherein
    the control unit assumes that the information indicating the orbit or the position of the flying object is valid in a given time range.

5.  A base station comprising:

    a reception unit configured to receive information indicating an orbit or a position of a flying object that relays a communication with a terminal from the flying object; and
    a transmission unit configured to transmit the information indicating the orbit or the position of the flying object to the terminal.

6.  A communication method performed by a terminal, the communication method comprising:

receiving information indicating an orbit or a position of a flying object that relays a communication with a base station; and

performing time or frequency synchronization in the communication with the base station relayed by the flying object, based on the information indicating the orbit or the position of the flying object.

# FIG.1

EP 4 401 476 A1

# FIG.2

SATELLITE 10A

SERVICE LINK

FEEDER LINK

DELAY DIFFERENCE
10.3 ms (GEO)
3.2 ms (LEO)

UE
(FAR
SIDE)
20B

UE
(NEAR
SIDE)
20A

NTN BEAM SIZE
3500 km (GEO)
1000 km (LEO)

10B

NTN GATEWAY

EP 4 401 476 A1

# FIG.3

GEO

ALTITUDE: 35,786 km
GEOSYNCHRONOUS
ORBIT

LEO

ALTITUDE: 500 – 2,000 km
ORBITAL PERIOD:
88 – 127 min

} SATELLITE
(SPACEBORNE)

HAPS

ALTITUDE: 8 – 50 km
TURNING FLIGHT

} FLYING OBJECT
(AIRBORNE)

gNB    GATEWAY

GEO

LEO

HAPS

EP 4 401 476 A1

# FIG.4

FEEDER LINK — 10A — SERVICE LINK

20A TERMINAL

or

20B VSAT

10D — CN  10C — gNB  10B — GATEWAY

| RRC/SDAP |
| --- |
| PDCP |
| RLC |
| MAC |
| PHY |

NR Uu

| RRC/SDAP |
| --- |
| PDCP |
| RLC |
| MAC |
| PHY |

EP 4 401 476 A1

# FIG.5

# FIG.6

$$f_{DL,f} + \Delta f_{DL,f} \qquad \Rightarrow \qquad f_{DL,s} + \Delta f'_{DL,f}$$

RX                                    TX

Freq conversion

$$f_{DL,f}$$

TX

$$f_{DL,s} + \Delta f'_{DL,f} + \Delta f_{DL,s}$$

RX

# FIG.7

# FIG.8

# FIG.9

# FIG.10

# FIG.11

10E

# FIG.12

10

COMMUNICATION UNIT

110
TRANSMISSION UNIT

120
RECEPTION UNIT

130
CONFIGURATION UNIT

140
CONTROL UNIT

# FIG.13

# FIG.14

FIG.15

EP 4 401 476 A1

## INTERNATIONAL SEARCH REPORT

| International application No. |
|---|
| **PCT/JP2021/033223** |

**A. CLASSIFICATION OF SUBJECT MATTER**

*H04W 56/00*(2009.01)i; *H04W 64/00*(2009.01)i; *H04W 84/06*(2009.01)i
FI: H04W56/00 130; H04W84/06; H04W64/00

According to International Patent Classification (IPC) or to both national classification and IPC

**B. FIELDS SEARCHED**

Minimum documentation searched (classification system followed by classification symbols)
H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Ericsson. On UL time and frequency synchronization enhancements for NTN[online], 3GPP TSG RAN WG1 #104-e R1-2100927, 05 February 2021<br>sections 2.2.2, 2.3.1, 3.2 | 1-6 |
| A | Ericsson. On UL time and frequency synchronization enhancements for NTN[online], 3GPP TSG RAN WG1 #106-e R1-2108240, 27 August 2021<br>sections 3, 5.2 | 1-6 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 401 476 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.300 V16.6.0,* June 2021
- *3GPP TS 38.213 V16.6.0,* June 2021